# EUROPEAN PATENT SPECIFICATION

(11) **EP 0 856 525 B1**
(45) Date of publication and mention of the grant of the patent: **17.12.2003**
(21) Application number: 98101363.4
(22) Date of filing: 27.01.1998
(51) Int. Cl.: C08F 4/642

(54) **Selective activity of metallocene-type catalyst for isotactic poly-alpha-olefin production**
Selektive Wirkung von Metallocen-Katalysatoren für die Herstellung von isotaktischen Polyolefinen
Activité sélective de catalyseurs à base de métallocènes pour la production de polyoléfines isotactiques

(30) Priority: 30.01.1997 US 790672
(43) Date of publication of application: 05.08.1998
(60) Divisional application: 02079474.9
(73) Proprietor: FINA TECHNOLOGY, INC., Houston, Texas 77267-4412 (US)
(72) Inventor: Shamshoum, Edwar S., Houston, Texas 77059 (US); Lopez, Margarito, Pasadena, Texas 77052 (US); Harris, Theodore G., Houston, Texas 77007 (US)
(74) Representative: Leyder, Francis

(56) References cited:
- EP-A- 0 284 707
- EP-A- 0 287 666
- DE-A- 4 139 263
- DE-C- 4 344 672
- US-A- 5 393 851
- MICHIELS W ET AL: "MIXED COCATALYST SYSTEMS IN METALLOCENE ETHYLENE POLYMERIZATION" MACROMOLECULAR SYMPOSIA, vol. 97, 1 July 1995, pages 171-183, XP000542002

## Description

### Field of the Invention

This invention relates to the use of metallocene molecules, in combination with appropriate cocatalyst, activator, agent for aging, or combinations thereof for the production of differentiated tacticity polymers, notably poly-α-olefins, particularly polypropylene.

### Background of the Invention

It is known that various factors affect the catalytic ability of the various metallocenes, cocatalysts, activators, and combinations available. We have found that the metallocene/activator combination, notably with supported catalyst systems, for isospecific polymer production benefits from unique pre-treatment leading to enhancement of catalyst activity. We have noted, particularly, that the supported isospecific catalyst which is capable of producing high melt flow products, products greater than about 10 dg/min, will provide higher polymer productivity when it is used very soon after activation with alkyl aluminum; the shorter the digestion time, the higher the catalyst productivity as measured by polymer production. However, isospecific metallocenes which are capable of producing lower melt flow resins, those products less than about 10 dg/min, tend to retain their activity for longer periods after activation. We have also found that the type of activator affects the activity of the catalyst as well as its aging requirements.

Catalyst productivity is of high interest to the producer of polymers. Simply put, the catalyst system is the most expensive raw material in the polymer production process; doubling the productivity of the catalyst effectively cuts the cost of that most expensive component in half. This is an enticing carrot before any polymer producer.

U.S. 5,393,851, issued to Ewen February 28, 1995, describes addition of an oleaginous solvent based solution of alumoxane, aluminum alkyl, or combinations of both to a previously-made concentrated stock solution of metallocene/alumoxane catalyst solution to provide aluminum necessary to enhance the catalytic reaction and to optimize the aluminum to metal ratio.

U.S. 5,258,475, issued to Kissin November 2, 1993, describes addition of mixture of trimethylaluminum (TMA) and an organotin to precursors of metallocenes. Such addition accomplishes catalyst activation. It is particularly noted that such activation may be useful for up to about 100 hours prior to catalyst introduction into the polymerization medium.

U.S. 5,241,025, issued August 31, 1993 to Hlatky et al. describes a catalyst system which comprises a Group III-A (Group 13) element compound for improving the productivity of an olefin polymerization catalyst which is the reaction product of a Group IV-B (Group 4) transition metal and an ionic activator compound which will irreversibly react with at least one ligand contained in the Group IV-B metal compound.

U.S. 5,153,157, issued October 6, 1992 to Hlatky et al., describes the combination of metallocene catalysts and ionic activators. This combination provides an active catalyst system for polymerization of alpha-olefins.

U.S. 5,145,819 issued September 8, 1992 to Winter et al. describes 2-substituted disindenylmetallocenes (sic), process for their preparation, and their use as catalysts in the polymerization of olefins. While this invention describes the use of 2-substituted bisindenyl metallocenes with methylalumoxane cocatalyst, together forming the catalyst system, for polymerization of olefins, no mention is made of activation of the catalyst system. No comment is made relative to timing of polymerization after formation of the catalyst system.

U.S. 4,933,403, issued June 12, 1990 to Kaminsky et al. describes a process for the preparation of optically active polyolefins, particularly isotactic polypropylene. This invention is exemplified by polymerization with optically active ethylene-bis-(4,5,6,7-tetrahydroindenyl)-zirconium dichloride (metallocene) and trimethylalumoxane.

WO 9614151, as published 17 May 1996, describes a silica supported catalyst system for alpha-olefin polymerization of a zirconium metallocene, dibutylmagnesium, 1-butanol, titanium tetrachloride and methylalumoxane. Use of such catalyst produces polyethylene with a bimodal molecular weight distribution.

WO 9613530, as published 9 May 1996, describes a catalyst system for olefin polymerization providing a supported mixed metallocene/non-metallocene catalyst. Such catalyst system provides broad molecular weight distributions.

### Summary of the Invention

Our invention provides, at least, high activity supported metallocene/alumoxane catalyst system for production of isotactic poly-α-olefin, particularly isotactic polypropylene (iPP). Also provided is means of producing isotactic poly-α-olefin at high rates and means of using metallocene/alumoxane catalyst system useful for producing isotactic poly-α-olefin during the system's period of highest activity.

### Brief Description of the Drawings

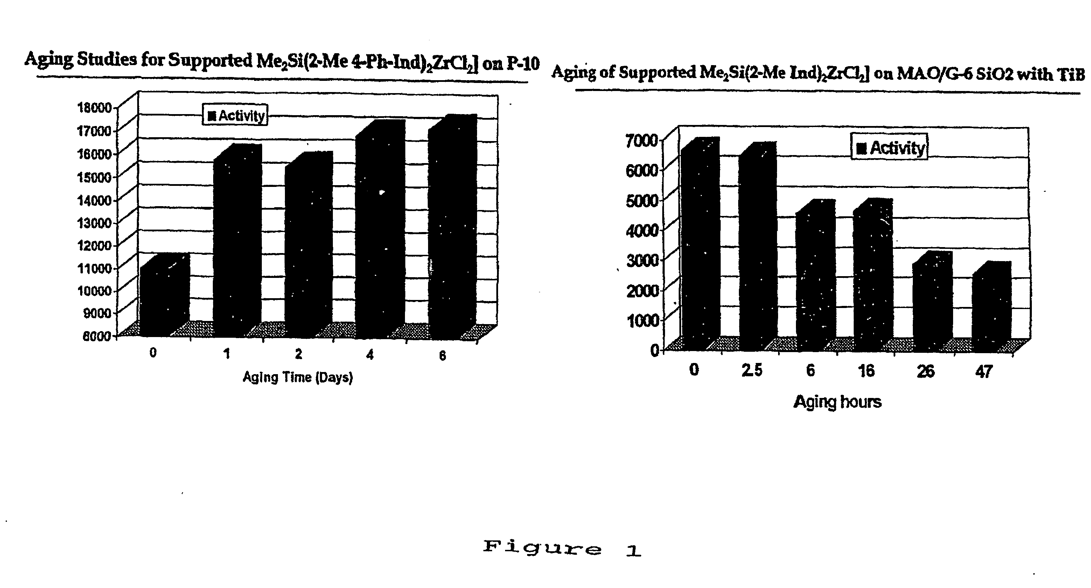

Figure 1 graphically displays isospecific catalyst system productivity plotted against aging or activation time, as beginning with introduction of aluminum alkyl into the catalyst system.

### Detailed Description

We provide embodiments of our invention in which metallocene\activator catalyst systems are treated to yield improved catalyst productivity. We also provide embodiments of our invention for production of isotactic polyolefin, especially poly-α-olefin, particularly isotactic polypropylene (IPP), at notably high rates.

An embodiment provides use of catalyst system comprising metallocene-type catalyst capable of producing isotactic poly α-olefin; cocatalyst or catalyst activator; and, optionally, catalyst system support; such system being activated by contact with alkyl aluminum; such that the activated catalyst system is used for polymerization within a minimum of about two hours through about 72 hours of its activation for producing polymers of melt flow greater than about eight dg/min;

Another embodiment provides process for polymerizing isotactic poly-α-olefin comprising the steps of:
A. Providing suitable catalyst system comprising metallocene-type catalyst capable of producing isotactic poly α-olefin; cocatalyst or catalyst activator; and, optionally, catalyst system support;
B. Activating suitable catalyst system by contacting with alkyl aluminum such that the activated catalyst system is used for polymerization
   within a minimum of about two hours through about 72 hours of its activation for producing polymers of melt flow greater than about eight dg/min;
C. Polymerizing suitable monomer, using activated catalyst system, to obtain desired isotactic polyolefin; and
D. Separating desired isotactic polyolefin.

A third embodiment provides process for polymerizing isotactic polypropylene comprising the steps of:
A. Providing catalyst system comprising:
   1) dimethylsilyl bis-2-methylindenyl zirconium dichloride and methylalumoxane, or
   2) dimethylsilyl bis-2-methyl, 4-phenylindenyl zirconium dichloride and methylalumoxane,
   supported on particles comprising silica;
B. Activating catalyst system by contacting with triisobutylaluminum;
C. Isotactically polymerizing propylene monomer using activated catalyst system within, respectively according to step A.
   a minimum of about two hours through about 72 hours of its activation for producing polymers of melt flow greater than about eight dg/min;
D. Collecting desired isotactic polypropylene.

While various factors affect the suitable use of catalyst capable of producing isotactic poly α-olefin, or polymerization of poly α-olefin particularly polypropylene, to provide product in the desired melt flow ranges, we have found that desired product will optimally be produced through use of temperatures in the range of about 50°C through about 70°C, particularly in the range of about 55°C through about 65°C, and especially at about 62°C; and with hydrogen concentration in the range of about zero through about 0.1 mole%, particularly in the range of up to about 0.05 mole%, and especially within the range of about zero through about 0.015 mole%. Such conditions of temperature and concentration are particularly useful in liquid and bulk-phase polymerization systems but the principles of optimal use or production are transferable to other polymerization systems.

Numerous metallocene-type catalysts are now well known in the art. Some of them are exemplified by U.S. 5,241,025; U.S. 5,153,157; U.S. 4,933,403; and U.S. 5,145,819. Useful metallocenes for this particular invention include those with a bridging group between the two mono or polynuclear structures which include at least a cyclopentadienyl ring bonded to the metal of the catalyst molecule. Such bridges usefully provide stereorigidity to the metallocene molecule by preventing free rotation of the cyclopentadienyl ring-bearing structure. These bridging groups will preferably also serve to control the accessibility of the active polymerization site by opening or closing the angle between the two cyclopentadienyl-ring-bearing structures or ligands (Cp ligands). The bridge may also usefully block or open the area around the bridge itself by providing bulky or minimally-sized side groups pendant from the actual bridge. The bridges may usefully include between about one and about four atoms making up the actual bridge structure between the Cp ligands. Such bridges may include carbon atoms which may be contributed by alkyl or alkylene groups, as well as silicon atoms which may be contributed by silylene, silyl, and other homologous groups such as those which are germanium- or even tin- containing. Various side groups may be included with the bridging ligand serving to block, by bulky side groups, or open, by small side groups, the area near the actual bridging path. Useful such bridging groups include ethylene, silylene, silyl, germyl, and germylene. Particularly useful bridges are found in the RR'Si group in which R and R' may be the same or different and either may be phenyl, propyl, ethyl, methyl, or combinations thereof. In light of availability as well as excellent functioning, the dimethylsilyl group has been found to be notably beneficial.

In propagating isotactic polyolefins, it is useful to provide a substituent pendant from the 2- position of the cyclopentadienyl ring-containing ligand (Cp ligand). 2-alkyl substitutions on the cyclopentadienyl rings usefully assist isotactic propagation of the poly-α-olefins. Such substituent may be small or bulky and particularly may be straight, branched, substituted alkyl groups, or their combinations, cycloakyl groups, or aryl groups including phenyl and tolyl. Particularly useful substituents at this position for the practice of this invention are t-butyl, isopropyl, ethyl, and methyl radicals. Based on experience and in light of availability, the 2-methyl substituted indenyl is notably useful.

Further useful species of substituted bis-indenyl metallocenes include those which are substituted at the 2- and 4- positions. Substituents at the 2- position remain as previously described while those at the 4- position are bulky alkyl groups and aromatic radicals including phenyl, tolyl, other phenyl-derived groups, naphthyl, fluorenyl, and their combinations. Based on experience and availability, particularly useful results are available with the 2-methyl, 4-phenyl indenyl metallocenes.

Useful metals to serve as the central coordination point and provide the active polymerization site for the metallocene molecule are those in Groups 3, 4, and 5 of the Periodic Table of the Elements. Choice of the metal atom will require consideration of the atom size. It may be possible, for example that a larger diameter metal atom will provide easier or more open access to the active polymerization site while a smaller diameter metal atom may be less active, it may provide a lower error rate in producing isotactic polymer. Those metals found in group 4, particularly zirconium, are notably useful in the practice of this invention.

Within the discussion of our invention, the metallocene chlorides, generally the dichlorides will be discussed and exemplified. It is to be understood that other halogenated metallocenes as well as alkylated species are also perfectly functional in the practice of our invention and they are considered as effectively equivalent to the chlorides. For example, metallocene dibromides and the alkylated homologues such as dimethyl and diethyl metallocenes will find beneficial use in the practice of our invention.

The cocatalyst or activator portion of the catalyst system may be a bulky labile ionic activator which may be irreversibly reacted with catalyst, alumoxane, or combinations thereof. Many of these activators are now well-known in the art and some are described in U.S. 5,241,025 and U.S. 5,153,157, or alumoxane. A particularly useful activator or cocatalyst for the practice of this invention is methylalumoxane but others including ethylalumoxane and isobutylalumoxane, their combinations, or their combinations with methylalumoxane may be used.

For the practice of this invention, the catalyst system may be optionally supported. Generally such supported catalyst systems are preferred since they are more easily handled. Usefully the support will be inert in the polymerization reaction, will have large effective surface area, and will hold the catalyst system, or at least one component thereof, to its surface. Numerous such supports are now well-known in the art including zirconia, alumina, silica, titania, maleic anhydride grafted polypropylene, starch, and other polymer such as p-hydroxypolystyrene, as well as their combinations. A notably useful support in the practice of this invention is silica.

Alkyl aluminums, or aluminum alkyls, provide catalyst system activation prior to use of the system. Useful system activators include trimethylaluminum (TMA), triethylaluminum (TEAl), dialkyl aluminum halides including diethyl aluminum chloride or bromide or dimethyl aluminum chloride or bromide, and others. Particularly useful in the practice of this invention is tri-isobutylaluminum (TiBAl) and tri-n-octyl aluminum (TNOAl) for use with Me₂Si(2-Me-Ind)₂ZrCl₂ and TiBAl, TNOAl, and TEA1 for Me₂Si(2-Me-, 4-Ph-, Ind)₂ZrCl₂.

### Examples

Metallocene/activator or cocatalyst catalyst systems for this series of experiments were produced and supported by providing 40 g silica which were transferred into a three-neck 1.0 1 round-bottom flask under dry nitrogen purge. Some useful silica-based supporting media may be selected from P-10, Q-10, G-6, silica-titania and silica-alumina as available from Fuji-sylisia as well as H-121 and H-31 as available from Asahi Glass. Preferably the support used will have small and uniform particle sizes with high effective surface area and high pore volume. For examples 1 - 6, G-6 was used as the supporting medium, while P-10 silica was used as the supporting medium for examples 7 - 11. Some results have been seen in our experimentation suggesting that the ratio of co-catalyst/activator to silica affects final catalytic activity. Our work demonstrates that the trends regarding aging-time sensitivity are similar with catalysts of this type and varying support media. The greatest possible catalytic activity, however, may not necessarily be attained in the absence of determination of the best co-catalyst/support ratio. In these cases this will be the MAO/silica-based support ratio whose optimum may or may not have been fully determined for each of the support media used in our experimental evaluations.

The flask was equipped with a reflux condenser capped with a gas inlet adapter, a 125 ml pressure-equalized addition funnel capped with a rubber septum, and the last neck was capped with a rubber septum. The silica-based support was slurried in 250 ml toluene at room temperature. 135.2 ml of a 30% methylalumoxane (MAO) solution in toluene at room temperature was slowly introduced into the flask. The resulting reaction is exothermic and releases methane as a byproduct. The reaction mixture was then stirred at reflux for four hours under dry argon. After four hours, the reflux and stirring was stopped and the contents of the flask were allowed to settle while cooling to room temperature. The supernatant was removed and the slurry was washed four times with 100 ml aliquots of toluene at room temperature. The resulting solid was dried at 70°C under vacuum for three hours. The MAO/support was recovered as an off-white free-flowing solid.

About 50 ml dry toluene was added to 5.0 g of the MAO/support in a 500 ml single-neck, side-arm, round-bottomed flask and the mixture was stirred at room temperature. A total loading of isospecific metallocene, dimethylsilylbis-2-methylindenyl zirconium dichloride recognized as being useful for producing isotactic polypropylene (IPP) with reasonable molecular weights, solid was slurried in toluene and added to the MAO/silica toluene slurry at room temperature. The mixture was stirred at room temperature for one hour under argon. The reaction mixture was left to settle at room temperature for fifteen minutes at which time the supernatant was removed. The solids were dried at room temperature under vacuum for one hour.

A master batch slurry of 180 mg of the supported metallocene, 8.3 ml mineral oil and 1.7 ml of 25% triisobutylaluminum (TiBAl) in hexanes was prepared at room temperature (about 25°C). This master batch was then aged at room temperature for varying periods of time prior to each polymerization. A 1.0 ml aliquot of the master slurry was used for each polymerization of isotactic, poly-α-olefin polymerization. Polymerizations were conducted in a 2.0 liter laboratory-scale autoclave (Zipperclave) liquid-phase stainless-steel batch reactor. The reactor was clean, dry, and had been thoroughly purged with dry nitrogen. The autoclave was then charged with 1.4 liters of liquid propylene and 16 mmoles of gaseous hydrogen. A 36 mg portion of catalyst and 77 mg of TEAL were mixed in 1 ml mineral oil and placed in a stainless steel 100 ml bomb. The mineral oil slurry was precontacted with a small amount of dry propylene at room temperature for approximately five seconds to allow some prepolymerization prior to charging into the reactor. The mixture was then heated to 60°C, stirred at approximately 1000 rpm, and maintained for 60 minutes. At the end of this time polymerization was terminated by rapidly venting the reactor of unreacted monomer. The resulting polymer was then separated followed by being dried at 80°C.

### Examples 1 - 6

For this series of polymerizations, the master batch was aged for twelve minutes, two and one-half hours, six hours, fifteen and one-half hours, twenty-six hours, and forty-eight hours, respectively, prior to each polymerization run.

Aging time begins upon introduction of TiBAl in mineral oil into the supported catalyst system slurry. The results of this series are presented in Table 1 below.

**Table 1**

| Example # | 1 | 2 | 3 | 4 | 5 | 6 |
|---|---|---|---|---|---|---|
| Catalyst System Aging (hrs) | 0.2 | 2.5 | 6.0 | 15.5 | 26.0 | 48.0 |
| Productivity (g/g/hr) | 6570 | 6570 | 4640 | 4610 | 2890 | 2180 |

In this series of experiments it is clear that the time lag between activation of the catalyst system with the alkyl aluminum and use of the catalyst system is critical to gaining advantage of the catalyst productivity for the isospecific catalyst. In the case of this isospecific catalyst system, that time period should be as short as possible, but clearly there is not remarkable deterioration in activity before the expiration of two hours. Also, it may be noted that reasonable, commercially acceptable activity levels remain until about six hours post-activation. We have noted a similar criticality of the post-activation, or digestion, time, yet with the opposite effect for the syndiospecific catalyst systems. With syndiospecific systems, an apparent need for longer digestion, or aging, is necessary to gain benefit in productivity of the catalyst system. This effect is described in copending application, USSN 08/503763, as filed 18 July 1995.

The effect of the choice of agent for activation or digestion was tested by using the same master batch, supported on P-10, and activating with TiBAl, TEAL, and TNOAl. Data obtained in this study are presented below in Table 2.

**Table 2**

| Example # | 7 | 8 | 9 | 10 | 11 |
|---|---|---|---|---|---|
| Catalyst System Aging (days) | -0- | 1 | 2 | 4 | 6 |
| Productivity TiBAl aging (g/g/hr) | 8,100 | 13,500 | 13,500 | 8,900 | 6,250 |
| Productivity TEA1 aging (g/g/hr) | 8,000 | 2,200 | -- | -- | -- |
| Productivity TNOAl aging (g/g/hr) | 8,050 | 8,150 | 7,500 | -- | -- |

From these data, it is apparent that TiBAl is a useful agent for activation for the isospecific catalysts and it functions well during the period in which its aged catalyst is functional, but it creates a situation in which the activity peaks quickly and drops off rapidly in a dramatic fashion. In contrast, TEA1 attains a fair activity level quickly but drops off precipitously extremely rapidly. A more stable aged or digested catalyst system may be obtained using TNOAl as the agent for digestion. It is apparent that it reaches a fair activity level quickly and maintains it well for an extended period. While the TNOAl activated catalyst system will not be as active as those activated with TiBAl, they will not be as dramatically time-sensitive.

These examples are provided for assistance in understanding this invention and the way in which it works. They are not intended, in any fashion, to limit the invention but are, simply illustrative. Those skilled in the art will recognize, from these representative examples and the entirety of this description, modifications which have not been specifically mentioned but which are intended to be included within this invention as claimed below.

## Claims

1. A process for preparing isotactic poly-alpha olefin of melt flow greater than 8 dg/min comprising the steps of :
A. providing a suitable catalyst system capable of producing isotactic poly-alpha olefin comprising a metallocene-type catalyst, an alumoxane as cocatalyst or catalyst activator, and optionally a catalyst support ;
B. ripening the suitable catalyst system of step A by contacting with an alkyl aluminum for a period of time of from 0.2 to 72 hours ;
C. polymerising a suitable monomer using the ripened catalyst system of step B ; and
D. recovering the desired isotactic polyolefin.

2. The process according to claim 1 wherein the poly-alpha olefin is polypropylene, the metallocene-type catalyst is dimethylsilyl bis-2-methylindenyl zirconium dichloride, the alumoxane is methylalumoxane, the catalyst system is supported on particles comprising silica and the ripening agent is triisobutylaluminum.

3. The process according to claim 1 wherein the metallocene-type catalyst has bridging group between cyclopentadienyl ring-bearing ligands; substituent group pendant to the carbon at the 2- position of both cyclopentadienyl ring-bearing ligands, and Group 4 metal atom bonded to both cyclopentadienyl ring-bearing ligands.

4. The process according to claim 3, wherein:
A. the bridging group of the catalyst system comprises silicon; and the 2- position substituent has between one and five carbon atoms;
B. the alumoxane is selected from trimethylalumoxane, triethylalimoxane, or combinations thereof.

5. The process according to claim 4, wherein:
A. the bridging group is dimethyl silyl; the 2- position substituent is methyl and Group 4 metal is zirconium;
B. the alumoxane is trimethylalumoxane; and
C. the catalyst system support is present.

6. The process according to claim 5, wherein use for polymerization occurs within two hours of activation for methyl only substituted species

7. The process according to claim 6, wherein:
A. the alkyl aluminum used for ripening is selected from trimethyl aluminum, triethyl aluminum, dimethyl aluminum halide, diethyl aluminum halide, triisobutyl aluminum, diisobutyl aluminum halide, or combinations thereof;
B. the polymerization method is selected from gas phase, liquid phase, bulk phase, or high pressure polymerization.

8. The process according to claim 7, wherein catalyst ripening system is accomplished with triisobutyl aluminum.

9. The process according to claim 8, wherein the polymerization temperature is within the range of 50 °C through 70 °C and hydrogen concentration is within the range of zero through 0.1 mole%.

10. The process according to claim 9, wherein the polymerization temperature is within the range of 55 °C through 65 °C and hydrogen concentration is within the range of zero through 0.05 mole%.

11. The process according to claim 10, wherein the polymerization temperature is about 62 °C and hydrogen concentration is within the range of zero through 0.015 mole%.

12. The process according to claim 11, wherein a suitable monomer is propylene, and the desired polymer is isotactic polypropylene.

13. The process according to claim 2, wherein the polymerization method is selected from gas phase, liquid phase, bulk phase, or high pressure polymerization.

14. The process according to claim 13, wherein polymerization occurs within about two hours of catalyst system activation.

15. The process according to claim 2, wherein polymerization temperature is within the range of 50 °C through 70 °C and hydrogen concentration is within the range of zero through 0.1 mole%.

16. The process according to claim 15, wherein the polymerization temperature is within the range of 55 °C through 65 °C and hydrogen concentration is within the range of zero through 0.05 mole%.

17. The process according to claim 16, wherein the polymerization temperature is about 62 °C and hydrogen concentration is within the range of zero through 0.015 mole%.

## Patentansprüche

1. Verfahren zur Herstellung eines isotaktischen Polyalphaolefins eines Schmelzflusses, der größer als 8 dg/min ist, Verfahren welches die folgenden Stufen umfasst:
A. ein Bereitstellen eines geeigneten Katalysatorsystems, welches in der Lage ist ein isotaktisches Polyalphaolefin zu produzieren, welches einen Katalysator von dem Typ eines Metallocens enthält, ein Alumoxan als einen Cokatalysator oder als einen Aktivator des Katalysators sowie wahlweise einen Katalysatorträger umfasst;
B. ein Reifen des geeigneten Katalysatorsystems aus der Stufe A durch das Herstellen eines Kontaktes mit einem Alkylaluminium während einer Zeitdauer von 0,2 bis 72 Stunden;
C. ein Polymerisieren eines geeigneten Monomers unter Verwendung des gereiften Katalysatorsystems aus der Stufe B; und
D. ein Gewinnen des gewünschten, isotaktischen Polyolefins.

2. Verfahren gemäß Anspruch 1, bei welchem das Polyalphaolefin ein Polypropylen ist, der Katalysator von dem Typ eines Metallocens ein Dimethylsilylbis-2-methylindenylzirkoniumdichlorid ist, das Alumoxan ein Methylalumoxan ist, das Katalysatorsystem auf Siliziumdioxid enthaltenden Teilchen getragen wird, und der Reifungszusatzstoff aus Triisobutylaluminium besteht.

3. Verfahren gemäß Anspruch 1, bei welchem der Katalysator vom Typ eines Metallocens eine Überbrückungsgruppe zwischen den einen Cyclopentadienylring tragenden Liganden aufweist; eine Gruppe eines Substituenten besitzt, welche an dem Kohlenstoffatom an der Position 2 der beiden einen Cyclopentadienylring tragenden Liganden hängt; und ein Metallatom der Gruppe 4 enthält, welches an beide einen Cyclopentadienylring tragende Liganden gebunden ist.

4. Verfahren gemäß Anspruch 3, bei welchem:
A. die Überbrückungsgruppe des Katalysatorsystems Silizium enthält; und der sich in Position 2 befindliche Substituent zwischen einem und fünf Kohlenstoffatome besitzt;
B. das Alumoxan ausgewählt wird unter Trimethylalumoxan, Triethylalumoxan oder Verbindungen derselben;

5. Verfahren gemäß Anspruch 4, bei welchem:
A. die Überbrückungsgruppe aus Dimethylsilyl besteht; und der sich in Position 2 befindliche Substituent aus Methyl besteht; und das Metall der Gruppe 4 aus Zirkonium besteht;
B. das Alumoxan aus Trimethylalumoxan besteht; und
C. der Träger des Katalysatorsystems vorhanden ist.

6. Verfahren gemäß Anspruch 5, bei welchem der Einsatz im Hinblick auf die Polymerisation innerhalb von zwei Stunden ab der Aktivierung der nur mit Methyl substituierten Verbindungsart erfolgt.

7. Verfahren gemäß Anspruch 6, bei welchem:
A. das für das Reifen verwendete Alkylaluminium ausgewählt wird unter Trimethylaluminium, Triethylaluminium, Dimethylaluminiumhalogenid, Diethylaluminiumhalogenid, Triisobutylaluminium, Diisobutylaluminiumhalogenid oder Verbindungen derselben;
B. das Polymerisationsverfahren ausgewählt wird unter der Gasphase, der flüssigen Phase, der aus der festen Masse bestehenden Phase oder der Hochdruckpolymerisation.

8. Verfahren gemäß Anspruch 7, bei welchem das Katalysatorreifungssystem mit Triisobutylaluminium durchgeführt wird.

9. Verfahren gemäß Anspruch 8, bei welchem die Temperatur der Polymerisation innerhalb des Bereiches von 50 °C bis 70 °C liegt und die Wasserstoffkonzentration sich innerhalb des Bereiches von Null bis 0,1 Mol-% befindet.

10. Verfahren gemäß Anspruch 9, bei welchem die Temperatur der Polymerisation innerhalb des Bereiches von 55 °C bis 65 °C liegt und die Wasserstoffkonzentration sich innerhalb des Bereiches von Null bis 0,05 Mol-% befindet.

11. Verfahren gemäß Anspruch 10, bei welchem die Temperatur der Polymerisation bei etwa 62°C liegt und die Wasserstoffkonzentration sich innerhalb des Bereiches von Null bis 0,015 Mol-% befindet.

12. Verfahren gemäß Anspruch 11, bei welchem ein geeignetes Monomer aus Propylen besteht und das gewünschte Polymer aus isotaktischem Polypropylen besteht.

13. Verfahren gemäß Anspruch 2, bei welchem das Polymerisationsverfahren ausgewählt wird unter der Gasphase, der flüssigen Phase, der aus der festen Masse bestehenden Phase oder der Hochdruckpolymerisation.

14. Verfahren gemäß Anspruch 13, bei welchem die Polymerisation innerhalb von etwa zwei Stunden ab der Aktivierung des Katalysatorsystems stattfindet.

15. Verfahren gemäß Anspruch 2, bei welchem die Temperatur der Polymerisation innerhalb des Bereiches von 50 °C bis 70 °C liegt und die Wasserstoffkonzentration sich innerhalb des Bereiches von Null bis 0,1 Mol-% befindet.

16. Verfahren gemäß Anspruch 15, bei welchem die Temperatur der Polymerisation innerhalb des Bereiches von 55 °C bis 65 °C liegt und die Wasserstoffkonzentration sich innerhalb des Bereiches von Null bis 0,05 Mol-% befindet.

17. Verfahren gemäß Anspruch 16, bei welchem die Temperatur der Polymerisation bei etwa 62°C liegt und die Wasserstoffkonzentration sich innerhalb des Bereiches von Null bis 0,015 Mol-% befindet.

## Revendications

1. Un procédé pour préparer une alpha-polyoléfine isotactique à indice de fluidité supérieur à 8 dg/min comprenant les étapes de:
A. fournir un système catalytique adéquat capable de produire une alpha-polyoléfine isotactique comprenant un catalyseur de type métallocène, un alumoxane comme co-catalyseur ou activateur de catalyseur, et facultativement un support de catalyseur;
B. faire mûrir le système de catalyseur adéquat de l'étape A par mise en contact avec un alkylaluminium pendant une période de temps de 0,2 à 72 heures;
C. polymériser un monomère adéquat en utilisant le système de catalyseur mûri de l'étape B; et
D. récupérer la polyoléfine isotactique souhaitée.

2. Procédé selon la revendication 1 où 1' alpha-polyoléfine est le polypropylène, le catalyseur de type métallocène est le dichlorure de diméthylsilyl bis-2-méthylindényl zirconium, l'alumoxane est le méthylalumoxane, le système de catalyseur est sur support de particules comprenant de la silice et l'agent de mûrissement est le triisobutylaluminium.

3. Procédé selon la revendication 1 où le catalyseur de type métallocène comporte un groupement de pontage entre les ligands portant les anneaux cyclopentadiényles; un groupement substituant pendant au carbone en position 2 des deux ligands portant les anneaux cyclopentadiényles, et un atome de métal du groupe 4 lié aux deux ligands portant les anneaux cyclopentadiényles.

4. Procédé selon la revendication 3 où:
A. le groupement de pontage du système de catalyseur comprend du silicium; et le substituant en position 2 comporte entre un à cinq atomes de carbone;
B. l'alumoxane est choisi parmi le triméthylalumoxane, triéthylalumoxane ou des combinaisons de ceux-ci.

5. Procédé selon la revendication 4 où:
A. le groupement de pontage est le diméthylsilyle;
le substituant en position 2 est un méthyle et
le métal du groupe 4 est le zirconium;
B. l'alumoxane est le triméthylalumoxane; et
C. le support du système de catalyseur est présent.

6. Procédé selon la revendication 5, où l'utilisation pour la polymérisation se produit endéans les deux heures après l'activation pour les espèces substituées par des méthyles seulement.

7. Procédé selon la revendication 6 où:
A. l'alkylaluminium utilisé pour le mûrissement est choisi parmi le triméthylaluminium, triéthylaluminium, halogénure de diméthylaluminium, halogénure de diéthylaluminium, triisobutylaluminium, halogénure de diisobutylaluminium, ou des combinaisons de ceux-ci;
B. le procédé de polymérisation est choisi parmi la polymérisation en phase gazeuse, en phase liquide, en masse, ou à pression élevée.

8. Procédé selon la revendication 7, où le système de mûrissement du catalyseur est réalisé avec le triisobutylaluminium.

9. Procédé selon la revendication 8, où la température de polymérisation est dans l'intervalle de 50°C à 70°C et la concentration d'hydrogène est dans l'intervalle de 0 à 0,1 mole%.

10. Procédé selon la revendication 9, où la température de polymérisation est dans l'intervalle de 55°C à 65°C et la concentration d'hydrogène est dans l'intervalle de 0 à 0,05 mole%.

11. Procédé selon la revendication 10, où la température de polymérisation est d'environ 62°C et la concentration d'hydrogène est dans l'intervalle de 0 à 0,015 mole%.

12. Procédé selon la revendication 11, où un monomère adéquat est le propylène, et le polymère souhaité est le polypropylène isotactique.

13. Procédé selon la revendication 2, où la méthode de polymérisation est choisie parmi la polymérisation en phase gazeuse, en phase liquide, en masse, ou à pression élevée.

14. Procédé selon la revendication 13, où la polymérisation se produit endéans environ 2 heures après l'activation du système catalytique.

15. Procédé selon la revendication 2, où la température de polymérisation est dans l'intervalle de 50°C à 70°C et la concentration en hydrogène est dans l'intervalle de 0 à 0,1 mole%.

16. Procédé selon la revendication 15, où la température de polymérisation est dans l'intervalle de 55°C à 65°C et la concentration en hydrogène est dans l'intervalle de 0 à 0,05 mole%.

17. Procédé selon la revendication 16, où la température de polymérisation est d'environ 62°C et la concentration en hydrogène est dans l'intervalle de 0 à 0,015 mole%.
